# EUROPEAN PATENT SPECIFICATION

(11) **EP 0 718 330 B1**
(45) Date of publication and mention of the grant of the patent: **31.05.2000**
(21) Application number: 95203599.6
(22) Date of filing: 21.12.1995
(51) Int. Cl.: C08F 297/04

(54) **Process for manufacturing multiarmed asymmetrical radial block copolymers**
Verfahren zur Herstellung vielverzweigter asymmetrischer Sternblockcopolymeren
Procédé de fabrication de copolymères blocs radiaux asymétriques et à plusieurs bras

(30) Priority: 23.12.1994 EP 94309737
(43) Date of publication of application: 26.06.1996
(73) Proprietor: SHELL INTERNATIONALE RESEARCH MAATSCHAPPIJ B.V., 2596 HR Den Haag (NL)
(72) Inventor: Leffelaar, Karel Hendrik, NL-1031 CM Amsterdam (NL); van Westrenen, Jeroen, NL-1031 CM Amsterdam (NL)

(56) References cited:
- EP-A- 0 324 992
- WO-A-94/22931
- WO-A-95/13314
- US-A- 5 212 249
- US-A- 5 447 995

## Description

The invention relates to a process for manufacturing multiarmed asymmetrical radial block copolymers and to multiarmed asymmetrical blockcopolymers obtainable with such a process.

More in particular the invention relates to a process for manufacturing six armed asymmetrical radial block copolymers, using a functional silicon containing coupling agent and intermediate living polymer arms, initially prepared from a conjugated diene and/or a mono vinyl aromatic monomer, and more in particular styrene, by anionic polymerisation.

Processes for manufacturing of multiarmed asymmetrical radial block copolymers were known in principle from e.g. US patent 4010226, European patent application No. 0314256, No. 0684267, WO 95/13314, and US patent 5212249.

US patent No. 4010226 disclosed the preparation of branched block copolymers of controlled structure by reacting conjugated diene and/or monoalkenyl arene and/or monoalkenyl pyridine monomer, with monolithium initiator to give monolithium terminated polymer of an average molecular weight of 7500, coupling with a poly(alkenyl compound) and reacting the resulting coupled polylithio intermediate with conjugated diene, monoalkenyl arene and/or monoalkenyl arene and/or alkenyl pyridine monomer at a temperature in the range of some -75°C to + 150°, each polymer branch so formed having an average molecualr weight of from 5000 - 1000,000.

The polymers obtained by said process and their hydrogenated derivatives were indicated to be used in footwear, adhesives, wire and cable coatings and automotive parts.

From the European patent application No. 0314256 a method was known for preparing asymmetric radial polymers, comprising the steps of:
(a) contacting a first polymer having a single reactive end group with a coupling agent, containing a plurality of functional groups which will react with the reactive end groups, the amount of said first polymer being substantially stoichiometrically corresponding with a part of the total amount of the functional groups, in such a way that the reaction between said first polymer and coupling agent proceeds substantially to completion;
(b) contacting in subsequent steps one or more polymers, being different from said first polymer and from each other and having a reactive end group, with the respective reaction production from each preceding step until all functional groups of the coupling agent have finally completely reacted; and
(c) recovering the obtained asymetric radial polymer. Said process was preferably used for coupling four arms, selected from polymers containing only polymerised conjugated diolefins and block copolymers comprising at least one monoalkenyl aromatic hydrocarbon polymer block and at least one conugated diolefin block, by means of silicon tetrachloride.

US patent No. 5,212,249 disclosed a process for preparing asymmetric radial polymers, wherein the different polymeric arms are contacted sequentially with a non polymerisable coupling agent, preferably being a silicon containing coupling agent, having up to 12 functional sites. Contacting in the final step in said process which frequently but not necessarily always will be the second step in the process, was carried out in the presence of a polar compound suitable for increasing the amount of vinyl content in a conjugated diolefin polymer during the polymerisation thereof. The polymers obtained according to this process showed a narrower relative arm distribution of the several asymmetric radial polymers produced and a significant increase of the amount of product having the devised ratio of polymeric arms. Non-polymerisable coupling agents having 3 or 4 functional groups were most preferred.

Useful polar compounds were selected from ethers, tertiary amines, pyridine and pyrolidene compounds, of which the di- and poly-functional ethers were preferred.

Said process was usually carried out in at least two separate reactors, to be used for the initial preparation of the first living polymer arm and the second living polymer arm respectively.

EP-A- 684267, which is prior art pursuant to Art 54(3) EPC, describes a process for the preparation of asymmetric radial polymers which comprises anionically polymerizing a second set of living polymer arms in the presence of the coupled first set of polymer arms, adding a coupling activator and coupling the second set of living polymer arms to the coupled first set of polymer arms to form an asymmetric radial polymer. The asymmetric radial polymer thus prepared has a narrow molecular weight distribution.

EP-A- 728156, which is prior art pursuant to Art 54(3) EPC, describes a process in which different sets of polymer arms are prepared by anionic polymerisation and the polymerised polymer arms are sequentially coupled to a coupling agent following polymerisation.

It will be appreciated that the hereinbefore discussed prior art processes did not enable to manufacture tailor made asymmetric block copolymers, containing one or more arms having a significantly broad molecular weight distribution (Q (as defined in page 19) > 1.1, preferably > 1.2) as desired for particular end use applications.

Therefore a process was aimed at for the manufacture of radial asymmetric block copolymers containing a combination of types of arms, one type of which having a relatively narrow molecular weight distribution (Mw/Mn < 1.1) and another type having a broad molecular distribution (Q (as defined in page 19) > 1.1 preferably > 1.2), i.e. having a significantly varying molecular weight, as expressed by Q in table 1.

Therefore an object of the present invention was to provide an economically attractive process for the manufacture of said radial asymmetric block copolymers.

As a result of research and experimentation such a process aimed at has surprisingly been found.

Accordingly, the invention relates to a process for the manufacture of sixarmed radial asymmetric block copolymers, comprising of the steps:
(a) Polymerisation of a predominantly (at least 80% wt.) conjugated diene and/or a predominantly (at least 80%) monoalkenyl aromatic hydrocarbon by means of an anionic monofunctional organo alkali metal initiator to obtain a first living polymer having a narrow molecular weight distribution (Mw/Mn < 1.1);
(b) Contacting the obtained living first polymer, containing a single reactive metal end group with a non polymerisable coupling agent containing six functional groups, which will react with the reactive end groups, the amount of said first polymer, being substantially stoichiometrically corresponding with four of the six functional groups, in such a way, that the reaction between the first living polymeric and the coupling agent proceeds substantially to completion;
(c) preparation of a second polymer arm, being different from said first living polymer, and having a broad molecular weight distribution (Mw/Mn > 1.1), in the same reactor, by polymerisation of a conjugated diene predominantly (at least 80% wt) consisting of 1,3-butadiene, initiated by an anionic monofunctional organoalkali metal initiator or a living, separately prepared poly (predominantly (at least 80% wt) (monoalkenyl-aromatic) or poly (predominantly (at least 80% wt) (conjugated diene) polymer arm, in the presence of the partially reacted coupling agent as obtained under (b)
(d) addition of a Lewis base capable of increasing the reactivity of the residual functional groups of the coupling agent in the product of step (b), and reacting these residual functional groups with the remaining in situ formed second living polymers until alls residual functional groups of the coupling agents have finally complety reacted, and
(e) recovering the asymetric radial polymer.

It will be appreciated that the reactivity of the initial reacting four functional groups of a non-polymerisable coupling agent, containing 6 functional groups, will be significantly stronger than the reactivity of the remaining two functional groups.

Preferably the first and second living polymer are comprising predominantly poly(conjugated diene) blocks and/or diblocks consisting of a predominantly poly(conjugated diene) block segment, and a predominantly poly(mono vinyl aromatic hydrocarbon), of which the second polymer block shows a significantly varying molecular weight.

With the term "predominantly" is meant that the blocks involved maybe constituted by a major amount of one monomer, mixed with a minor amount (up to 20 wt %) of another comonomer, e.g. a major fraction of butadiene or isoprene mixed with a minor fraction of styrene, ∝-methyl styrene etc or a major fraction of styrene mixed with a minor fraction of 1,3 butadiene or isoprene or mixtures thereof. It will be appreciated that such comonomer mixtures may form tapered block copolymer segments or substantially random copolymer segments, which both may be included as arms in the complete multiarmed asymetric radial block copolymers. The firstly introduced living polymer arms having a narrow molecular weight distribution, may be prepared from monomers selected from 1,3-butadiene, isoprene, 2,3-dimethyl 1,3 butadiene, 1,3-pentadiene; 1,3-hexadiene or mixtures thereof, and/or from monomers selected from styrene, alfa-methylstyrene, o-methyl styrene, p-methylstyrene, p-tertbutylstyrene, 1,3-dimethylstyrene, or mixtures thereof.

The secondly introduced living polymer arms, having a broad molecular weight distribution, may be prepared from at least predominantly 1,3-butadiene, as the last polymerising monomer, optinally preceded by a minor block of monomers selected from styrene, α-methylstyrene, o-methyl-styrene, p- methylstyrene, p-tertbutylstyrene, 1,3-dimethylstyrene or mixtures thereof, or by a block of branched conjugated diene, such as isoprene.

More preferably the firstly introduced living arm polymers are selected from substantially pure 1,3-butadiene homopolymers, substantially pure isoprene homopolymers; substantially pure styrene homopolymers and combinations thereof.

More preferably the secondly introduced living arm polymers, showing a broad molecular weight distribution, are selected from substantially pure 1,3 butadiene homopolymers and combinations of substantially pure 1,3 butadiene homopolymers and substantially pure styrene homopolymers or substantially pure isoprene homopolymers, wherein the poly(1,3-butadiene) block, representing a significant part of the total living polymer arm, must be the last formed.

Most preferably the multiarmed radial asymmetric block copolymers of the present invention comprise a first set of arms, consisting of a block of substantially pure poly(1,3-butadiene) or a block of substantially pure poly(isoprene) or a diblock of a substantially pure poly(styrene), and a substantially pure poly(1,3-butadiene) or substantially pure poly(isoprene), and a second set of arms consisting of substantially pure 1,3-butadiene homopolymer or a diblock of initially prepared substantially pure poly(styrene) and subsequently formed substantially pure poly(butadiene).

It will be appreciated that in the living polymers a high degree of 1,4 polymerisation (90-% or more) will preferably occur in case of poly(butadiene) polymers.

Preferred organo alkali metal initators for the steps (a) and (c)of the process of the present invention are lithium alkyl or lithium alkoxy compounds, lithium cycloalkyl, lithium alkyl substituted cycloalkyl, lithium phenyl or lithium alkyl substituted phenyl, having from 1 to 20 carbon atoms and preferably from 2 to 8 carbon atoms. More preferably tert-butyl lithium or sec-butyl lithium are used

Non polymerisable coupling agents which can in principle be used in step (b) are silicon containing compounds selected from compounds of the formulae X₃-Si-SiX_{3,} X₃ Si-O-SiX₃, and X₃ Si-(CH₂)ₙ -SiX₃, wherein X represents halogen, hydride, carboxyl or alkoxy radicals, having from 1 to 4 carbon atoms. Preferably Cl₃ Si-CH₂-CH₂SiCl₃ (BTCSE) or (MeO)₃ Si-CH₂-CH₂-Si (OMe)₃ (BTMSE) are used. Most preferably Cl₃-Si-CH₂-CH₂-Si-Cl₃ (BTCSE) is used.

According to preferred embodiments of the process of the present invention multiarmed asymmetric radial block copolymers [AC]₄X[B]₂ are manufactured, using as coupling agent 1,2 bis(trichlorosilyl) ethane (BTCSE), or 1,2-bis(trimethoxy silyl) ethane (BTMSE) by contacting said coupling agent with four initially prepared living poly(butadiene) or poly(isoprene) blocks or diblocks, containing a poly(styrene) and a poly(butadiene) or poly(isoprene) block, leaving two reactive sites available, which are finally reacted with another type of in situ prepared living block copolymer segments as hereinbefore specified, after reactivation of these residual sites with a polar compound, ultimately resulting in a 6 armed asymmetric radial block copolymer.

According to one most preferred embodiment, a one reactor multiarmed asymmetric block copolymer is prepared by a first step preparation of living poly(styrene)-poly(butadiene) diblock segments or living poly(styrene)-poly(isoprene) diblock segments, having a narrow molecular weight distribution; followed by coupling of these intermediate polymers with four of the most reactive coupling sites of 1,2-bis(trichlorosilyl)ethane (BTCSE) and initiation of new poly(butadiene) segments, by means of an alkyllithium initiator such as butyl lithium followed by reactivation of the remaining functional sites of the partially coupled polymer by means of a polar compound and reacting these remaining functional sites.

It will be appreciated that as either propagation of poly(butadiene) chain segment or coupling onto the remaining coupling sites of BTCSE can take place, such a process yields a broader molecular weight distribution of the poly(butadiene) non load bearing chains.

According to another most preferred embodiment a two reactor multiarmed asymmetric radial block copolymer [C]₄X[AB]₂ is prepared by a first preparation of poly(butadiene) or poly(isoprene) living chains and coupled to four sites of BTCSE. Subsequently this coupled intermediate is contacted with living poly(styrene) chains, prepared in a second reactor, and 1,3 butadiene monomer in order to prepare living poly(styrene)-poly(butadiene) arms, wherein the poly(butadiene) segment has a broad molecular weight distribution, and subsequent reacting of the remaining sites of the partially coupled polymer, after reactivation of said sites by means of a polar compound

In general, the living polymer segments useful as arms in the process of the present invention may be prepared by contacting the monomer or monomers with organo alkali metal compound in a suitable solvent at a temperature within the range of from -50°C to 150°C and preferably at a temperature within the range of from 0°C to 100°C.

The living polymers to be introduced as arms in the process of the present invention, are in general contacted with the coupling agent in step (b) at a temperature within the range of from 0°C to 100°C, at a pressure in the range of from 1 bar to 8 bar.

In step (c) second polymer segments, to be used as a second set of arms in the complete multiarmed radial asymmetric block copolymer and showing significantly varying molecular weights (relative broad molecular weight distribution), are prepared in the presence of the remaining, not reacted functional sites of the coupling reagent, which has reacted already with a first set of arms, having a relatively narrow molecular weight distribution.

Said second polymer segments may be prepared from butadiene, by means of added alkyl lithium initiator and more preferably butyl lithium initiator, or of added living separately prepared growing chains, constituted by at least a predominantly poly(monovinyl aromatic) segment, and more in particular poly(styrene) segment.

In step (d) the one or more Lewis bases are added to increase the reactivity of the residual functional groups of the initially reacted coupling agent, i.e. the product of step (b).

The Lewis bases to be used in step (d) of the process of the present invention to increase the reactivity of the remaining reacting sites of the coupling agent, include ethers, such as diethyl ether, dibutyl ether, tetrahydrofuran, ethylene glycol dimethyl ether, ethylene glycol diethyl ether, ethylene glycol dibutyl ether, diethylene glycol dimethyl ether, diethylene glycol di ethylether, diethylene glycol dibutyl ether, dioxane, diethoxy propane, triethylene glycol diethyl ether, 1,2-dimethoxy benzene, 1,2,3-trimethoxy benzene, 1,2,4 trimethoxy benzene, 1,2,3-tri ethoxy benzene, 1,2,3-tributoxy benzene, 1,2,4-triethoxy benzene.

Preferred polar compounds have been found to be 1,2-diethoxypropane, dioxane, orthodimethoxy benzene and diethylene glycol diethyl ether.

In general, the suitable polar compounds will be used at a concentration within the range from 0.001 to 20 wt % and preferably from 10 to 1000 ppm. relative to weight of the reaction mixture.

It will be appreciated that another aspect of the present invention is formed by the novel class of multiarmed radial asymmetric copolymers, obtainable by the hereinbefore specified process and which may be characterised by sets of different arms, one set of which comprising block segments showing a relatively broad molecular weight distribution (Q > 1.1, preferably Q>1.2), obtainable by in situ preparation of said living arms in the presence of free active sites of a partially reacted coupling agent and another set of which comprising block segments showing a relatively narrow molecular weight distribution (Mw/Mn<1.1) originating from the first separate reaction step. Preferably both block segments have a relatively high 1,4 polymerisation degree (≥ 90%) in case of poly(butadiene).

In general the monoblock polymer segments, showing a relatively narrow molecular weight distribution and constituting one set of arms of the radial asymmetric block copolymers, will normally have a weight average molecular weight in the range of from 5000 to 150,000 and preferably within the range of from 10,000 to 70,000. When a diblock or multiblock segment is used as arm, the weight average molecular weight will be within the range of from 20,000 to 250,000 and preferably from 20,000 to 100,000.

The multiarmed radial asymmetric block copolymers according to the present invention of the formula [AC]₄X[B]₂, wherein A represents a block of predominantly monovinyl-aromatic, which is load bearing in the complete multiarmed radial asymmetric block copolymers, wherein C represents a block of predominantly conjugated diene, wherein X is the residue of a six valence coupling agent and wherein B represents a block of predominantly 1,3-butadiene, having a broad molecular weight distribution, have been found to show a significant lower melt viscosity, as compared with those of structurally related radial symmetrical block copolymers, and a high softening point, in combination with acceptable other mechanical properties. This combination of properties makes said polymers suitable for application in adhesive, sealant and coating compositions and in bitumen compositions for road paving and/or roofing, wherein moreover, if desired, relatively large amounts of filler can be incorporated.

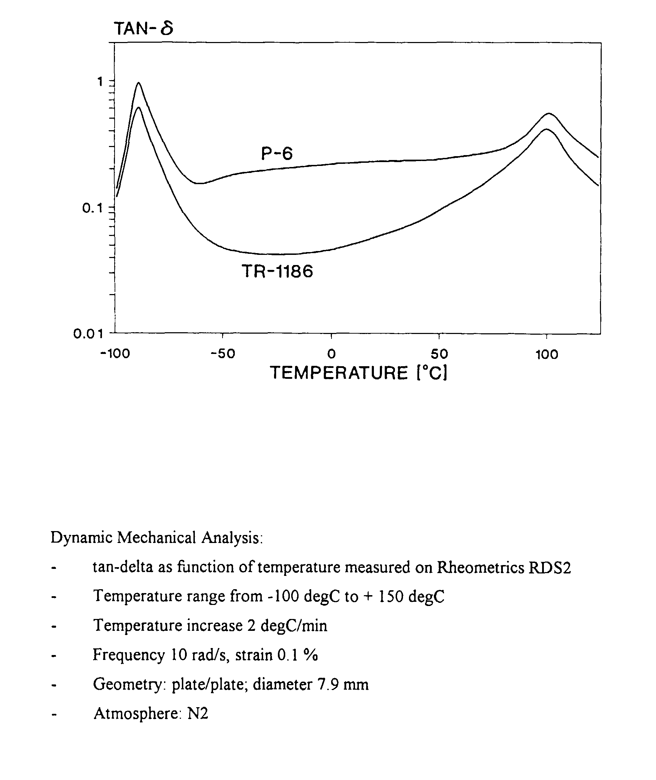

The multiarmed radial asymmetric block copolymers according to the present invention of the formula [C]₄ X [BA]₂, wherein A, B, X and C are as defined hereinbefore, containing only two load bearing arms have been found to show an attractive low hardness at normal poly(monovinyl aromatic) contents in combination with a high softening point (i.e. 100°C or higher), a low melt viscosity at high temperatures and an increased mechanical loss (tan δ) over a wide temperature frequency range loss (reference is made to the figure). This combination of properties makes said polymers suitable for application in bitumen compositions for sound deadening and/or vibration damping compositions.

A found reduced elastic recovery facilitates vacuum molding of three dimensional sound deadening sheets.

In particular for sound deadening applications, those multiarmed radial asymmetric block copolymers [C]₄X[BA]₂ can be used, containing two poly(styrene)-poly(butadiene), wherein the poly(butadiene) segments of which have a rather broad molecular weight distribution, and four poly(butadiene) or poly(isoprene) arms, having a relatively narrow molecular weight distribution.

The invention may be further illustrated by the following examples, however, without restricting its scope to these embodiments.

### Example 1

175 g of styrene was added to 6 l of cyclohexane at 50°C, after which 8.75 mol sec-butyl lithium was added. The reaction was completed after 40 minutes.
Hereafter, 272 g of butadiene was added to the same reactor. The polymeristion was allowed to proceed at 70°C for 60 minutes. Then 2.19 mmol of the coupling reagent BTCSE was added and was allowed to react for 10 minutes.

After sampling from the reactor, the intermediate product (INT1) isolated by evaporating the solvent and was analysed by ASTM D 3314, GPC analysis by ASTM D 3536 (see Table I). The reaction mixture was cooled down to 60°C before the reaction sequence was followed by subsequently adding 50 g of butadiene and 3.75 mmol of a second portion of sec-butyl lithium into the reaction mixture. After 5 minutes at 60°C the remaining 86 g of butadiene was dosed to the reactor. The polymerisation was then allowed to proceed for 80 minutes at 60°C. The loose polybutadienyl arms formed were coupled to the remaining coupling side by adding 1.4 ml of diethoxypropane. The coupling reaction was allowed to proceed for another 30 minutes at 60°C

The obtained polymer P1 was stabilised with 0.6% ionol and isolated by steam stripping to give white crumbs.

The polymer P1 was analysed by ASTM D 3314 and ASTM D3536 (see Table I).

### Example 2

A six armed asymmetrical styrene-butadiene blockcopolymer P2 was prepared as in example 1, except that 94 g styrene were added to 6 l cyclohexane at 50°C, after which 9.43 mol sec-butyllithium were added. After the polymerisation was completed, 170 g butadiene were dosed to the same reactor. The polymerisation continued until completion. Hereafter 2.37 mmol of the couppling reagent BTCSE were added. INT2 was sampled at this stage. The reaction sequence was followed by adding 50 g of butadiene to the reaction and 4.72 mmol sec-butyllithium. Hereafter, 186 g of butadiene were dosed to the reactor.

After the polymerisation is completed 1.1 ml of diethoxypropane were added.

The polymer was stabilised and isolated similar to polymer P1.

The polymer P2 was analysed by ASTM D 3314 and D 3536 (see Table I).

### Example 3

A six armed asymmetrical styrene-butadiene blockcopolymer P3 was prepared as in example 1, except that 72 g styrene were added to 6 l cyclohexane at 50°C, after which 7.25 mol sec-butyllithium were added. After the polymerisation was completed, 362 g butadiene were dosed to the same reactor. The polymerisation continued until completion. Hereafter 1.81 mmol of the coupling reagent BTCSE was added. INT3 was sampled at this stage. The reaction sequence was followed by adding 65 g of butadiene to the reaction and 3.62 mol sec-butyllithium.

After the polymerisation is completed 1.1 ml of diethoxypropane were added.

The polymer was stabilised and isolated similar to polymer P1.

The polymer P3 was analysed by ASTM D 3314 and D 3536 (see Table I).

### Example 4

A six armed asymmetrical styrene-butadiene blockcopolymer P4 was prepared as in example 1, except that 263 g styrene were added to 6 l cyclohexane at 50°C, after which 8.77 mmol sec-butyllithium were added. After the polymerisation was completed, 158 g butadiene were dosed to the same reactor. The polymerisation continued until completion. Hereafter 2.19 mmol of the coupling reagent BTCSE were added. INT4 was sampled at this stage. The reaction sequence was followed by adding 79 g of butadiene to the reaction and 4.39 mmol sec-butyllithium.

After the polymerisation is completed 1.3 ml of dioxane were added.

The polymer was stabilised and isolated similar to polymer P1.

The polymer P4 was analysed by ASTM D 3314 and D 3536.

### Example 5

A six armed asymmetrical styrene-butadiene blockcopolymer P5 was prepared as in example 1, except that 143 g styrene were added to 6 l cyclohexane at 50°C, after which 4.76 mmol sec-butyllithium were added. After the polymerisation was completed, 238 g butadiene were dosed to the same reactor. The polymerisation continued until completion. Hereafter 1.19 mmol of the coupling reagent BTCSE were added. INT5 was sampled at this stage. The reaction sequence was followed by adding 50 g of butadiene to the reaction and 2.38 mmol sec-butyllithium. Hereafter, 69 g of butadiene were dosed to the reactor.

After the polymerisation is completed 1.1 ml of diethoxy-propane were added.

The polymer was stabilised and isolated similar to polymer P1.

The polymer P5 was analysed by ASTM D 3314 and D 3536.

### Example 6

In the first reactor 150 g of styrene were added to 3 l of cyclohexane at 50°C, after which 7.50 mmol sec-butyl lithium were added. The reaction was completed after 40 minutes. In the second reactor 233 g of butadiene were added to 3 l of cyclohexane at 70°C, after which 15 mmol sec-butyl lithium were added. The polymerisation was allowed to proceed at 70°C for 60 minutes. Then 3.75 mmol of the coupling reagent BTCSE were added and was allowed to react for 10 minutes.

After sampling from the second reactor, the intermediate product (INT6) isolated by evaporating the solvent and was analysed by ASTM D 3537 (see Table I).

The reaction sequence was followed by subsequently adding 117 g of butadiene and pumping the content of the first reactor to the second one. After 40 minutes at 70°C the polymerisation was completed and 1.4 mL diethoxypropane were added to allow the coupling reaction to occur. The coupling reaction was allowed to proceed for another 20 minutes at 70°C.

The obtained polymer P6 was stabilised with 0.6% Ionol and isolated by steam stripping to give white crumbs.

The polymer P6 was analysed by ASTM D 3314 and ASTM D3536 (see Table I).

### Example 7

In the first reactor 129 g of styrene were added to 3 l of cyclohexane at 50°C, after which 4.31 mmol sec-butyl lithium were added. The reaction was completed after 40 minutes. In the second reactor 155 g of butadiene were added to 3 l of cyclohexane at 70°C, after which 8.62 mmol sec-butyl lithium were added. The polymerisation was allowed to proceed at 70°C for 60 minutes. Then 2.16 mmol of the coupling reagent BTCSE were added and was allowed to react for 10 minutes.

After sampling from the second reactor, the intermediate product (INT7) isolated by evaporating the solvent and was analysed by ASTM D 3537 (see Table I).

The reaction sequence was followed by subsequently adding 216 g of butadiene and pumping the content of the first reactor to the second one. After 45 minutes at 70°C the polymerisation was completed and 1.4 mL diethoxypropane were added to allow the coupling reaction to occur. The coupling reaction was allowed to proceed for another 20 minutes at 70°C.

The obtained polymer P7 was stabilised with 0.6% IRGANOX 1010 and isolated by steam stripping to give white crumbs.

The polymer P7 was analysed by ASTM D 3314 and ASTM D3536 (see Table I).

### Comparative Example A

A six armed asymmetrical styrene-butadiene blockcopolymer CPA was prepared as in example 1, except that 263 g styrene were added to 6 l cyclohexane at 50⁻C, after which 8.77 mol sec-butyllithium were added. After the polymerisation was completed, 158 g butadiene were dosed to the same reactor. The polymerisation continued until completion. Hereafter 2.19 mmol of the couppling reagent BTCSE were added. The intermediate product INTA was sampled at this stage. The reaction sequence was followed by adding 100 g of isoprene to the reaction and 4.39 mmol sec-butyllithium.

After the polymerisation is completed 1.3 ml of dioxane were added.

The polymer was stabilised and isolated similar to polymer P1.

The polymer CPA was analysed by ASTM D 3314 and D 3536.

### Comparative Example B

In the first reactor 150 g of styrene were added to 3 l of cyclohexane at 50°C, after which 7.50 mmol sec-butyl lithium were added. The reaction was completed after 40 minutes. In the second reactor 233 g of butadiene were added to 3 l of cyclohexane at 70°C, after which 15 mmol sec-butyl lithium were added. The polymerisation was allowed to proceed at 70°C for 60 minutes. Then 3.75 mmol of the coupling reagent BTCSE was added and was allowed to react for 10 minutes.

After sampling from the second reactor, the intermediate product (INTB) was isolated by evaporating the solvent and was analysed by ASTM D 3537 (see Table I).

The reaction sequence was followed by subsequently adding 160 g of isoprene and pumping the content of the first reactor to the second one. After 40 minutes at 70°C the polymerisation were completed and 1.4 mL diethoxypropane were added to allow the coupling reaction to occur. The coupling reaction was allowed to proceed for another 20 minutes at 70°C.

The obtained final polymer CPB was stabilised with 0.6% Ionol and isolated by steam stripping to give white crumbs.

The polymer CPB was analysed by ASTM D 3314 and ASTM D3536 (see Table I).

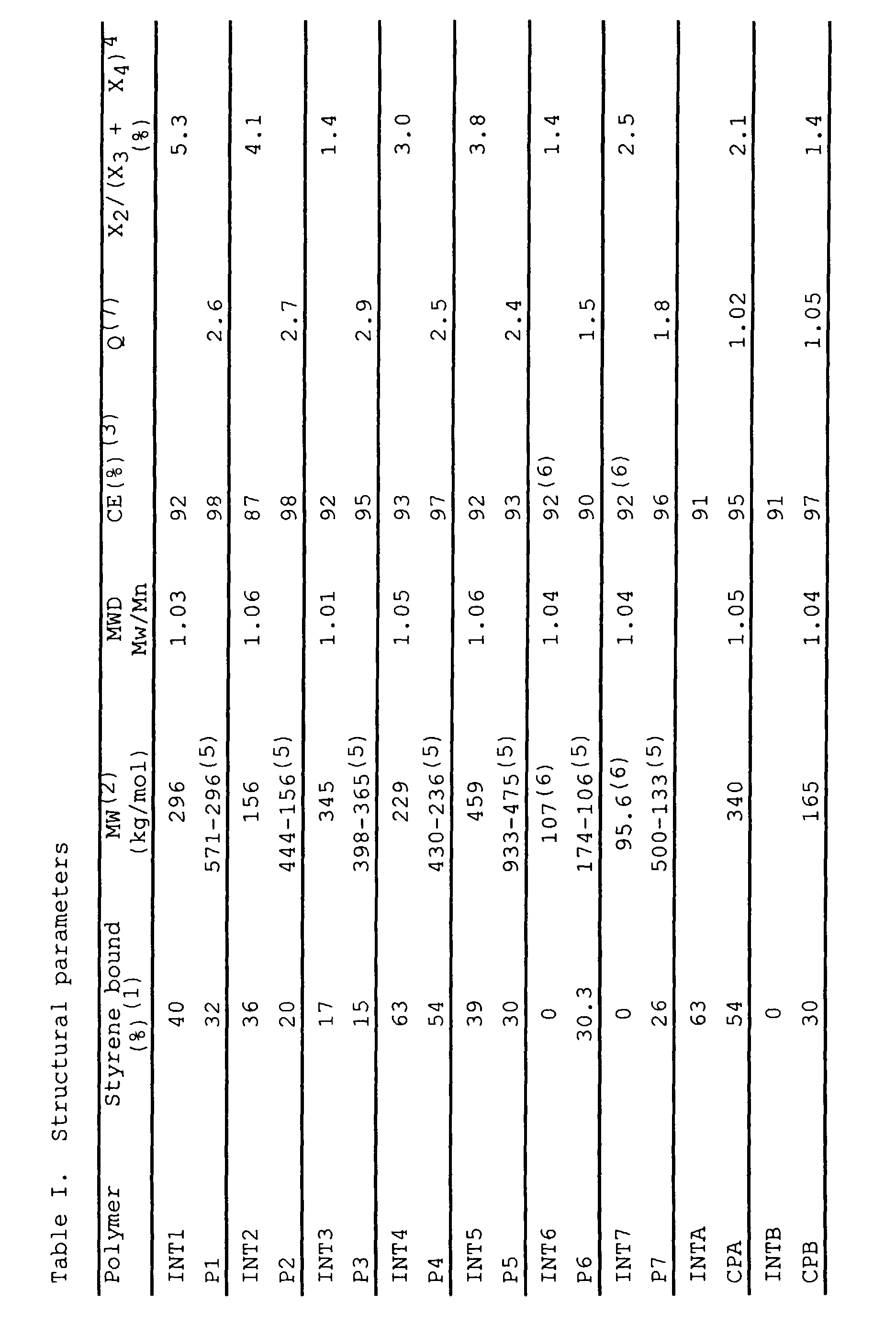

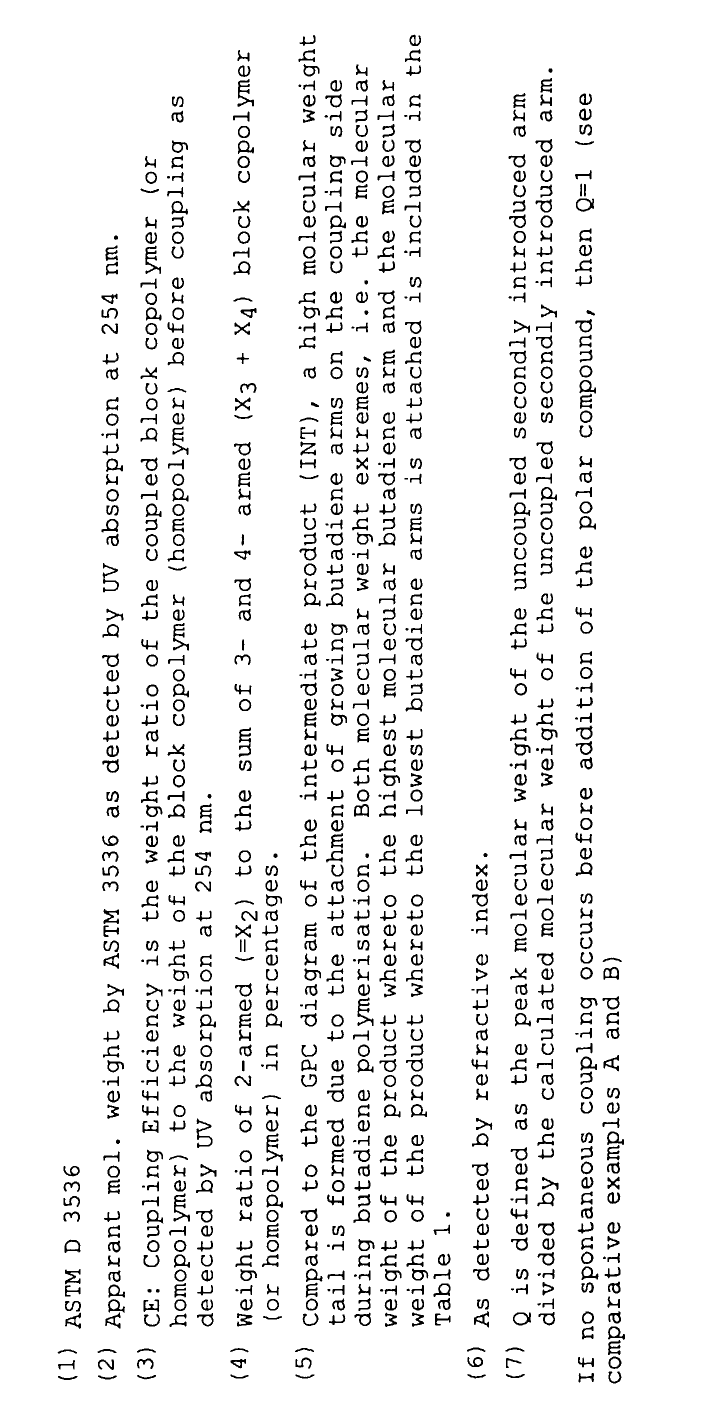

**Table II**

| Polymer properties | | | |
|---|---|---|---|
| Polymer Properties | D 1186¹ | P1 | P6 |
| Melt index [g/10 min]² | 0 | 0 | 5.0 |
| Tensile strength [MPa] | 18.5 | 10.5 | 2.0 |
| Modulus 300% [MPa] | 3.0 | 3.1 | 1.5 |
| Elongation [%] | 650 | 600 | 330 |
| Hardness [ShA] | 80 | 79 | 40 |
| Compression set [%] | 48 | 57 | 25 |

| | | | |
|---|---|---|---|
| ¹ Commercially available under tradename KRATON D 1186 and used as comparison. | | | |
| ² Melt index has been measured at 200°C with a 5 kg load. | | | |

### Example 8

Compositions containing 12 wt% of the multiarmed radial asymmetric block copolymers prepared according to the examples 1 and 6, as well as 12 wt% of a commercially available radial multiarmed block copolymer grade identified by KRATON D-1186 having a molecular structure X(SB)₄, in two bitumen grades, identified with PX-200 and PX-180 respectively, were prepared and tested. (KRATON is a trademark.)

The test results have been summarised in the following tables III and IV.

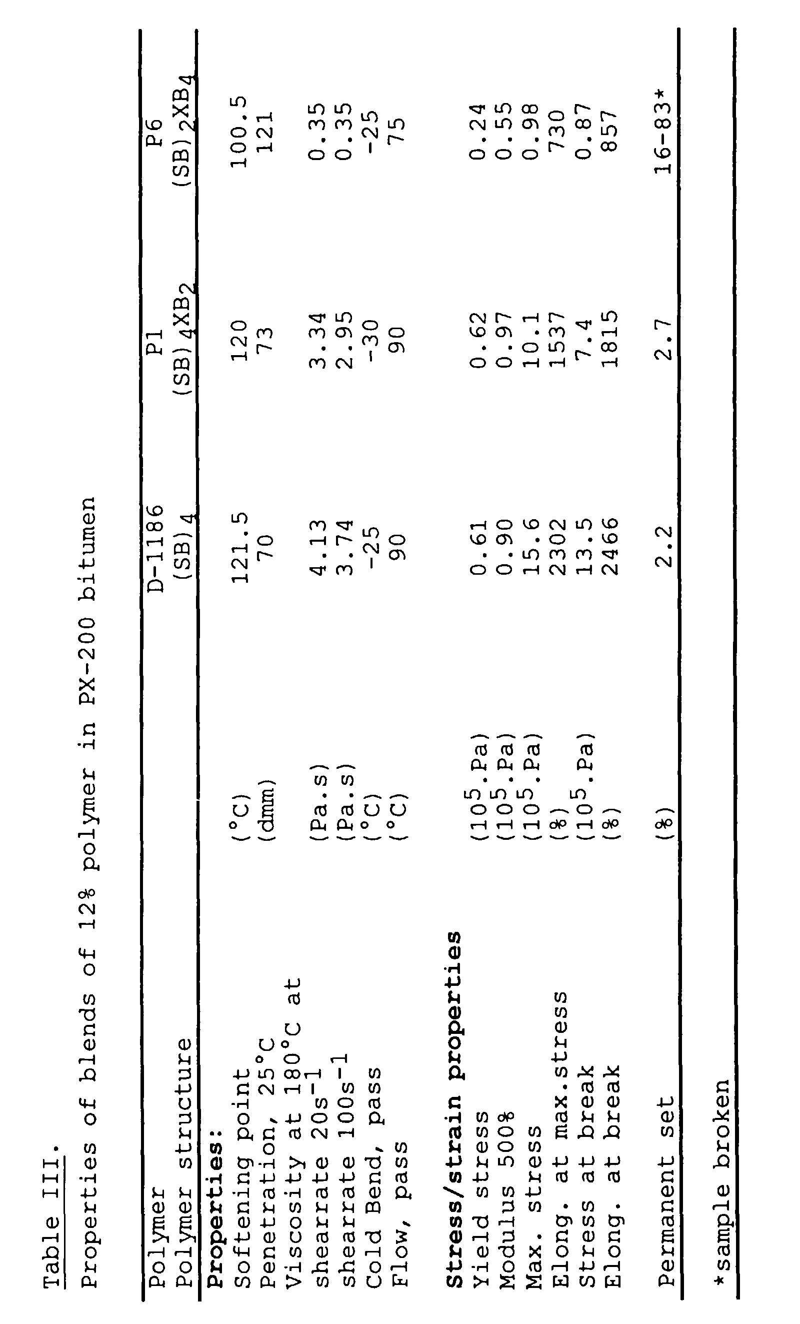

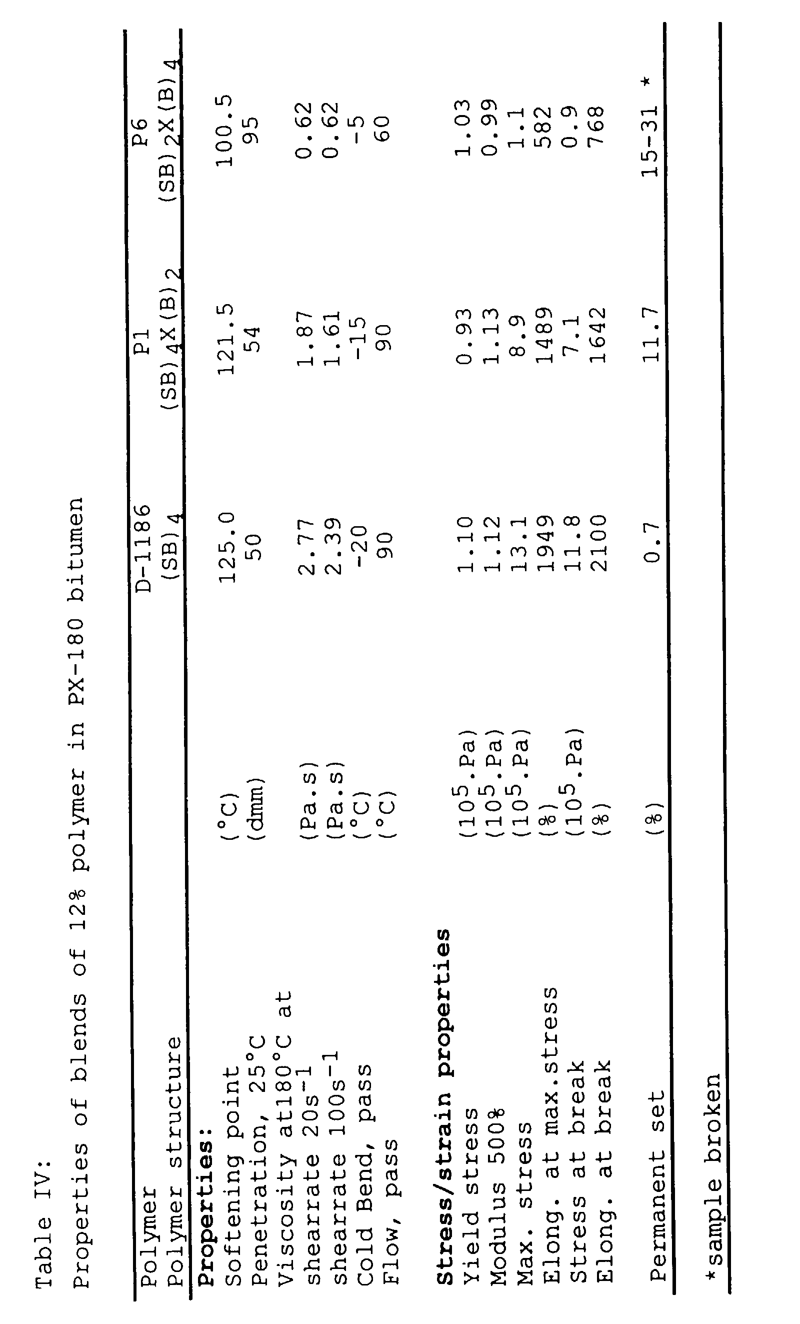

## Claims

1. Process for the manufacture of sixarmed radial asymmetric block copolymers, comprising of the steps:
(a) Polymerisation of a predominantly (at least 80% wt) conjugated diene and/or a predominantly (at least 80% wt) monoalkenyl aromatic hydrocarbon by means of an anionic monofunctional organo alkali metal initiator to obtain a first living polymer having a narrow molecular weight distribution (Mw/Mn < 1.1);
(b) Contacting the obtained living first polymer, containing a single reactive metal end group with a non polymerisable coupling agent containing six functional groups, which will react with the reactive end groups, the amount of said first polymer, being substantially stoichiometrically corresponding with four of the six functional groups, in such a way, that the reaction between the first living polymer and the coupling agent proceeds substantially to completion;
(c) preparation of a second polymer arm, being different from said first living polymer, and having a broad molecular weight distribution (Mw/Mn > 1.1), in the same reactor, by polymerisation of a conjugated diene predominantly (at least 80% wt) consisting of 1,3-butadiene, initiated by an anionic monofunctional organoalkali metal initiator or a living, separately prepared poly (predominantly (at least 80% wt) (monoalkenylaromatic) or poly (predominantly (at least 80% wt) (conjugated diene) polymer arm, in the presence of the partially reacted coupling agent as obtained under (b)
(d) addition of a Lewis base capable of increasing the reactivity of the residual functional groups of the coupling agent in the product of step (b), and reacting these residual functional groups with the remaining in situ formed second living polymers until all residual functional groups of the coupling agents have finally completely reacted, and
(e) recovering the asymmetric radial polymer.

2. Process according to claim 1, characterised in that the first living polymers are selected from substantially pure 1,3-butadiene homopolymers, substantially pure isoprene homopolymers, substantially pure styrene homopolymers, and combinations thereof.

3. Process according to claims 1-2, characterised in that the secondly introduced living arms are selected from substantially pure poly(1,3-butadiene) and combinations of substantially pure 1,3-butadiene homopolymer and substantially pure styrene homopolymer or substantially pure isoprene homopolymer, wherein the poly(1,3 butadiene) block must be the last formed.

4. Process according to claims 1-3, characterised in that the coupling agent Cl₃Si-CH₂-CH₂-SiCl₃ is used.

5. Process according to claims 1-4, characterised in that in one reactor, an asymmetric block copolymer is prepared by a first step, comprising preparation of living poly(styrene) -poly(butadiene) diblock segments or living poly(styrene) -poly(isoprene) diblock segments, showing a high 1,4 polymerisation degree (≥90%) in case of 1,3-butadiene, followed by coupling of these intermediate polymers with four of the most reactive coupling sites of 1,2-bis(trichlorosilyl)ethane; and initiation of new poly(butadiene) segments by means of an alkyllithium initiator.

6. Process according to claims 1-5, characterised in that as polar compound in step (d) is used 1,2-diethoxypropane, dioxane orthodimethoxy benzene and diethylene glycol diethylether.

7. Six armed radial asymmetric block copolymers, characterised by sets of different arms, the second set of which is comprising block segments showing relatively broad molecular weight distribution (Mw/Mn > 1.1), and the first set of which is comprising block segments showing a relatively narrow molecular weight distribution (Mw/Mn < 1.1), obtainable by a process as claimed in any one of the preceding claims.

8. Six armed radial asymmetric block copolymers according to claim 7, characterised in that the first set of polymer arms are diblock polymer segments which have a weight average molecular weight in the range of from 20,000 to 250,000.

9. Use of the six armed radial asymmetric block copolymers according to claims 7-8 in adhesive-, sealant- or coating compositions or in blends with bitumen for use in roofing and sound deadening and/or vibration damping compositions.

## Patentansprüche

1. Verfahren zur Herstellung von sechsarmigen radialen asymmetrischen Blockcopolymeren, das die folgenden Stufen umfaßt:
(a) Polymerisation eines überwiegend (wenigstens 80 Gew.-%) konjugierten Diens und/oder eines überwiegend (wenigstens 80%) monoalkenylaromatischen Kohlenwasserstoffes mittels eines anionischen monofunktionellen Organoalkalimetallinitiators zur Ausbildung eines ersten lebenden Polymers mit einer engen Molekulargewichtsverteilung (Mw/Mn <1,1);
(b) Inkontaktbringen des erhaltenen lebenden ersten Polymers, das eine einzige reaktionsfähige Metallendgruppe enthält, mit einem nicht polymerisierbaren Kupplungsmittel, das sechs funktionelle Gruppen enthält, die mit den reaktionsfähigen Endgruppen reagieren werden, wobei die Menge des ersten Polymers im wesentlichen stöchiometrisch mit vier von den sechs funktionellen Gruppen übereinstimmt, derart, daß die Umsetzung zwischen dem ersten lebenden Polymer und dem Kupplungsmittel im wesentlichen bis zur Vollständigkeit verläuft;
(c) Herstellung eines zweiten Polymerarmes, der von dem ersten lebenden Polymer verschieden ist und eine breite Molekulargewichtsverteilung (Mw/Mn >1,1) aufweist, in dem gleichen Reaktor durch Polymerisation eines konjugierten Diens, das überwiegend (zu wenigstens 80 Gew.-%) aus 1,3-Butadien besteht, initiiert durch einen anionischen monofunktionellen Organoalkalimetallinitiator oder durch einen lebenden, getrennt hergestellten Poly(überwiegend (wenigstens 80 Gew.-%) monoalkenylaromat)-Polymerarm oder Poly(überwiegend (wenigstens 80 Gew.-%)konjugiertes Dien)-Polymerarm, in Gegenwart des partiell umgesetzten Kupplungsmittels, wie unter (b) erhalten;
(d) Zugabe einer Lewis-Base, die zur Steigerung des Reaktionsvermögens der restlichen funktionellen Gruppen des Kupplungsmittels in dem Produkt aus Stufe (b) befähigt ist, und Umsetzen dieser restlichen funktionellen Gruppen mit den verbliebenen, in situ gebildeten zweiten lebenden Polymeren, bis alle restlichen funktionellen Gruppen des Kupplungsmittels schließlich vollständig reagiert haben, und
(e) Gewinnen des asymmetrischen radialen Polymers.

2. Verfahren nach Anspruch 1, dadurch gekennzeichnet, daß die ersten lebenden Polymere unter im wesentlichen reinen 1,3-Butadienhomopolymeren, im wesentlichen reinen Isoprenhomopolymeren, im wesentlichen reinen Styrolhomopolymeren und Kombination hievon ausgewählt werden.

3. Verfahren nach den Ansprüchen 1 bis 2, dadurch gekennzeichnet, daß die als zweite eingeführten lebenden Arme unter im wesentlichen reinem Poly(1,3-butadien) und Kombinationen aus im wesentlichen reinem 1,3-Butadienhomopolymer und im wesentlichen reinem Styrolhomopolymer oder im wesentlichen reinem Isoprenhomopolymer ausgewählt werden, wobei der Poly(1,3-butadien)block als letzter ausgebildet werden muß.

4. Verfahren nach den Ansprüchen l bis 3, dadurch gekennzeichnet, daß das Kupplungsmittel Cl₃Si-CH₂-CH₂-SiCl₃ verwendet wird.

5. Verfahren nach den Ansprüchen l bis 4, dadurch gekennzeichnet, daß in einem Reaktor ein asymmetrisches Blockcopolymer durch eine erste Stufe ausgebildet wird, die die Herstellung von lebenden Poly(styrol)-Poly(butadien)zweiblocksegmenten oder von lebenden Poly(styrol)-Poly(isopren)zweiblocksegmenten mit einem hohen 1,4-Polymerisationsgrad (≥ 90%) im Falle von 1,3-Butadien und ein anschließendes Kuppeln dieser intermediären Polymere mit vier der reaktionsfähigsten Kupplungsstellen von 1,2-Bis(trichlorsilyl)ethan und eine Initiierung von neuen Poly(butadien)segmenten mittels eines Alkyllithiuminitiators umfaßt.

6. Verfahren nach den Ansprüchen 1 bis 5, dadurch gekennzeichnet, daß als polare Verbindung in Stufe (d) 1,2-Diethoxypropan, Dioxan, o-Dimethoxybenzol oder Diethylenglycoldiethylether eingesetzt wird.

7. Sechsarmige radiale asymmetrische Blockcopolymere, gekennzeichnet durch Sätze von unterschiedlichen Armen, von denen der zweite Satz Blocksegmente mit einer verhältnismäßig breiten Molekulargewichtsverteilung (Mw/Mn >1,1) umfaßt und von denen der erste Satz Blocksegmente mit einer verhältnismäßig engen Molekulargewichtsverteilung (Mw/Mn <1,1) umfaßt, erhältlich nach einem Verfahren, wie in einem der vorstehenden Ansprüche beansprucht.

8. Sechsarmige radiale asymmetrische Blockcopolymere nach Anspruch 7, dadurch gekennezeichnet, daß der erste Satz von Polymerarmen aus Zweiblockpolymersegmenten mit einem gewichtsmittleren Molekulargewicht im Bereich von 20.000 bis 250.000 besteht.

9. Verwendung der sechsarmigen radialen asymmetrischen Blockcopolymere nach den Ansprüchen 7 bis 8 in Klebstoff-, Dichtmittel- oder Beschichtungszusammensetzungen oder in Mischungen mit Bitumen zur Anwendung in Bedachungs-, Schalldämpfungs- und/oder Vibrationsdämpfungszusammensetzungen.

## Revendications

1. Procédé de fabrication de copolymères blocs asymétriques radiaux à six branches, comprenant les étapes suivantes :
(a) la polymérisation d'un diène conjugué essentiellement (au moins 80 % en poids) et/ou d'un hydrocarbure monoalcényl aromatique essentiellement (au moins 80 %) au moyen d'un initiateur d'organométal alcalin monofonctionnel anionique pour obtenir un premier polymère vivant ayant une distribution de poids moléculaires étroite (Mw/Mn <1,1);
(b) la mise en contact du premier polymère vivant obtenu, contenant un seul groupe d'extrémité métallique réactif avec un agent de couplage non polymérisable contenant six groupes fonctionnels, qui réagiront avec les groupes d'extrémité réactifs, la quantité de ce premier polymère, étant sensiblement stoechiométriquement correspondante à quatre des six groupes fonctionnels, d'une manière telle que la réaction entre le premier polymère vivant et l'agent de couplage se développe sensiblement jusqu'à la fin;
(c) la préparation d'une seconde branche de polymère, différente du premier polymère vivant, et ayant une distribution de poids moléculaires étendue (Mw/Mn >1,1), dans le même réacteur, par la polymérisation d'un diène conjugué formé essentiellement (au moins 80 % en poids) de 1,3-butadiène, initiée par un initiateur d'organométal alcalin monofonctionnel anionique ou d'une branche de polymère poly [essentiellement (au moins 80 % en poids)] (monoalcényl-aromatique) ou de poly [essentiellement (au moins 80 % en poids)] (diène conjugué), en présence de l'agent de couplage ayant partiellement réagi tel qu'obtenu sous (b);
(d) l'addition d'une base de Lewis pouvant accroître la réactivité des groupes fonctionnels résiduels de l'agent de couplage dans le produit de l'étape (b), et la réaction de ces groupes fonctionnels résiduels avec les seconds polymères vivants formés in situ restants jusqu'à ce que la totalité de deux groupes fonctionnels résiduels des agents de couplage ait finalement complètement réagi; et
(e) la récupération du polymère radial asymétrique.

2. Procédé suivant la revendication 1, caractérisé en ce que les premiers polymères vivants sont choisis parmi les homopolymères de 1,3-butadiène sensiblement purs, les homopolymères d'isoprène sensiblement purs, les homopolymères de styrène sensiblement purs et leurs combinaisons.

3. Procédé suivant l'une ou l'autre des revendications 1 et 2, caractérisé en ce que les branches vivantes introduites en second lieu sont choisies parmi le poly(1,3-butadiène) sensiblement pur et les combinaisons d'homopolymère de 1,3-butadiène sensiblement pur et d'homopolymère de styrène sensiblement pur ou d'homopolymère d'isoprène sensiblement pur, dans lesquelles le bloc de poly(1,3-butadiène) doit être le dernier formé.

4. Procédé suivant l'une quelconque des revendications 1 à 3, caractérisé en ce qu'on utilise l'agent de couplage Cl₃Si-CH₂-CH₂SiCl₃.

5. Procédé suivant l'une quelconque des revendications 1 à 4, caractérisé en ce que dans un réacteur, on prépare un copolymère bloc asymétrique par une première étape, comprenant la préparation de segments diblocs de poly(styrène)-poly(butadiène) vivants ou de segments diblocs de poly(styrène)-poly(isoprène) vivants, montrant un degré de 1,4-polymérisation élevé (≥90 %) dans le cas du 1,3-butadiène, suivie du couplage de ces polymères intermédiaires avec quatre des sites de couplage de 1,2-bis(trichlorosilyl)éthane les plus réactifs, et de l'initiation de nouveaux segments de poly(butadiène) au moyen d'un initiateur d'alkyllithium.

6. Procédé suivant l'une quelconque des revendications 1 à 5, caractérisé en ce que comme composé polaire dans l'étape (d) on utilise le 1,2-diéthoxypropane, le dioxane, l'orthodiméthoxy benzène ou l'éther diéthylique de diéthylène glycol.

7. Copolymères blocs asymétriques radiaux à six branches, caractérisés par des séries de branches différentes, dont la seconde série comprend des segments blocs montrant une distribution de poids moléculaires relativement étendue (Mw/Mn >1,1), et dont la première série est formée de segments blocs montrant une distribution de poids moléculaires relativement étroite (Mw/Mn <1,1), obtenables par un procédé suivant l'une quelconque des revendications précédentes.

8. Copolymères blocs asymétriques radiaux à six branches suivant la revendication 7, caractérisés en ce que la première série de branches de polymère est constituée de segments de polymère diblocs qui ont un poids moléculaire moyen pondéral allant de 20.000 à 250.000.

9. Utilisation des copolymères blocs asymétriques radiaux à six branches suivant l'une ou l'autre des revendications 7 et 8, dans des compositions d'adhésif, d'étanchéité ou d'enrobage ou dans des mélanges avec du bitume utilisables dans des chapes d'étanchéité et dans des compositions absorbant le son et/ou amortissant les vibrations.
